# FASCICULE DE BREVET EUROPEEN

(11) **EP 2 306 816 B1**
(45) Date de publication et mention de la délivrance du brevet: **08.04.2015**
(21) Numéro de dépôt: 09772730.9
(22) Date de dépôt: 29.06.2009
(51) Int. Cl.: A01N 1/00

(54) **Utilisation de compositions topiques pour la conservation du corps humain ou animal**
Verwendung von topischen Zubereitungen zur Konservierung eines menschlichen oder tierischen Körpers
Use of topical compositions for the preservation of a human or animal body

(30) Priorité: 01.07.2008 FR 0854447
(43) Date de publication de la demande: 13.04.2011
(73) Titulaire: Arkema France, 92700 Colombes (FR)
(72) Inventeur: DUBOIS, Jean-Luc, F-69390 Millery (FR)
(74) Mandataire: Killis, Andréas
(86) Numéro de dépôt international: PCT/FR2009/051253
(87) Numéro de publication internationale: WO 2010/001048

(56) Documents cités:
- EP-A1- 1 505 049
- RU-C1- 2 116 725
- ENIKOLOPOV, N. S.: 'Polyformaldehyde' U.S.S.R. FROM: IZOBRET., PROM. OBRAZTSY, TOVARNYE ZNAKI CODEN: URXXAF vol. 45, no. 4, 1968,

## Description

La présente invention est relative au domaine de la conservation des cadavres humains ou animaux. Plus particulièrement, l'invention concerne l'utilisation topique d'une composition pour conserver et/ou embaumer un corps humain ou animal, cette composition, à visée non thérapeutique, renfermant : (a) au moins un POM (PolyOxyMéthylènedialkyléther) et/ou au moins un acétal de dialdéhyde, (b) au moins un agent biocide et (c) éventuellement, au moins un agent pro-pénétrant.

La thanatopraxie, ou embaumement du corps mort, est une pratique réclamée par les familles des défunts pour conserver au corps un aspect acceptable jusqu'à son inhumation ou sa crémation. Cependant, dans certaines circonstances, cet acte peut devenir obligatoire, notamment dans les cas de déplacements internationaux des corps, de transports des corps avant crémation dans des cercueils à parois plus minces que ceux destinés à être enterrés, voire en l'absence de cercueil, dans certains cas de réintégration à leur domicile du corps de personnes décédées dans un centre hospitalier, et aussi dans certains cas de dépôt en caveau provisoire.

En outre, la conservation hygiénique des corps est le moyen moderne et efficace d'éviter la propagation des maladies par le contact des vivants et des morts ainsi que la pollution et la souillure des objets et de l'habitat.

On connaît différents composés qui sont utilisés pour embaumer et/ou conserver les cadavres humains ou animaux. Notamment, le phénol et des aldéhydes tels que le formaldéhyde et le glutaraldéhyde (pentanedial-1,5) sont couramment utilisés dans ce domaine.

Cependant, ces composés utilisés à haute dose sont malodorants, toxiques et ont tendance à laisser les corps traités dans un état rigide.

En outre, les méthodes habituelles de conservation des corps nécessitent l'injection intra-artérielle de compositions d'embaumement après élimination du sang contenu dans le défunt. Or, cette étape d'extraction du sang, pratiquée généralement après incision de la carotide ou de l'artère fémorale, est considérée par certaines religions comme une mutilation inacceptable du défunt.

Il subsiste donc le besoin de disposer de compositions non toxiques pour le thanatopracteur et qui permettent de conserver efficacement et rapidement les corps sans porter atteinte à leur intégrité.

Or, la satisfaction de ce besoin est rendue complexe par le fait que la majorité des bactéries responsables de la décomposition des corps, et qui doivent être détruites ou dont l'activité doit être inhibée, se trouvent dans le sang, que l'on ne souhaite pas éliminer. Ces compositions doivent donc présenter un effet biocide suffisant pour empêcher que ces bactéries ne décomposent le corps. De plus, la composition doit pénétrer suffisamment dans le corps pour atteindre ces bactéries.

Il subsiste par ailleurs le besoin de disposer de compositions affectant le moins possible l'aspect esthétique du corps, en particulier n'augmentant pas, ou que dans une faible mesure, la rigidité, la pâleur, les émanations d'odeurs et/ou la déshydratation du corps.

Or, la Demanderesse a maintenant découvert que ces besoins pouvaient être satisfaits en appliquant topiquement sur la peau des cadavres une composition renfermant notamment au moins un composé de type PolyOxyméthylènedialkyléther (POM) et/ou au moins un acétal de dialdéhyde.

Les composés POM sont connus mais pour des utilisations différentes. Par exemple, le brevet français FR 2 881 750 décrit une utilisation des POM en tant que carburants pour piles à combustible.

De même, les acétals de dialdéhydes sont connus dans des applications autres que l'embaumement des corps, par exemple en tant que synthons pour la synthèse organique (WO 02/42524), additifs (EP0855436) ou adhésifs (FR2844802). Le document de brevet RU 208 939 décrit l'utilisation de diéthoxyéthane pour la conservation des cadavres et EP 1 938 684 (publié le 02.07.2008) décrit l'utilisation d'un POM et/ou d'un acétal de dialdéhyde pour la conservation du corps humain ou animal.

L'invention vise plus précisément l'utilisation topique d'une composition renfermant :
(a) au moins un polyoxyméthylènedialkyléther (POM) de formule (I) :

   R- (OCH₂)ₙ-OR' (I)

   dans laquelle R et R', identiques ou différents, représentent un radical alkyle, linéaire ou ramifié, comportant de 1 à 5 atomes de carbone et n est un indice de valeur comprise entre 1 et 8,
   et/ou au moins un acétal de dialdéhyde de formule (II) : 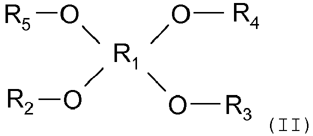 où R₂, R₃, R₄ et R₅ désignent indépendamment un radical alkyle, linéaire ou ramifié, comportant de 1 à 8 atomes de carbone, ou R₂ et R₅ et/ou R₃ et R₄ forment ensemble et avec les deux atomes d'oxygène auxquels ils sont rattachés un hétérocycle saturé ou insaturé à 5 ou 6 chaînons éventuellement substitué par un ou plusieurs groupes choisis parmi OH, CH₂OH ou un radical alkyle, linéaire ou ramifié, comportant de 1 à 8 atomes de carbone ; et R₁ représente un groupe CH-R₆-CH où R₆ forme une liaison ou représente un radical alkylène linéaire ou ramifié, comportant de 1 à 5 atomes de carbone ou un carbocycle saturé ou insaturé comportant de 3 à 8 atomes de carbone; ou R₁ est un carbocycle saturé ou insaturé comportant de 3 à 8 atomes de carbone,
(b) au moins un agent biocide choisi parmi : le formaldéhyde, le dioxyde de soufre, l'hydrogénosulfite de sodium, le disulfite de sodium, le sulfite de sodium, le sulfite de potassium, le disulfite de potassium, le bronopol, la 1,2-benzisothiazole-3(2H)-one, le monochlorhydrate de dodécylguanidine, le glutaral, le dithioxyanate de méthylène, le monochlorhydrate de polymère de N,N"'-1,6-hexane-diylbis[N'-cyanoguanidine] et d'hexaméthylène diamine/polyhexaméthylène biguanide, le peroxyde de butanone-2, le 3-(2,2-dichlorovinyl)-2,2-diméthylcyclopropanecarboxylate de m-phénoxybenzyle/perméthrine, les chlorures d'ammonium quaternaire, la bis(trichlorométhyl)sulfone, l'acide borique, la N,N-diéthyl-m-toluamide, la 2-méthyl-2H-isothiazole-3-one, et leurs mélanges, et
(c) éventuellement, au moins un agent pro-pénétrant.

Il est entendu que, dans le contexte de cette description, le terme « compris entre » doit être interprété comme incluant les bornes indiquées.

Au sens de l'invention, on entend par « conserver », le fait que l'action enzymatique est arrêtée ou freinée dans le tissu humain ou animal, par rapport au tissu non traité, ce qui empêche ou ralentit la destruction auto-catalytique de ce tissu, et/ou que les tissus résistent mieux aux attaques extérieures des bactéries et des mycètes que des tissus non traités.

Les composés (I) utilisés selon l'invention sont des PolyOxyMéthylènedialkyléthers qui sont désignés par le sigle POM pour PolyOxyMéthylène auquel sont adjointes une ou deux lettres (POMXX) permettant d'identifier les radicaux alkyle(s) R et R', M pour méthyle, E pour éthyle, P ou i-P pour (iso)propyle, B pour butyle, Pe pour pentyle et H pour hexyle, ainsi que par un indice correspondant au nombre n de motifs (CH₂O)(POMXXₙ).

Ces produits sont dénommés par exemple :
- POMMₙ (polyoxyméthylènediméthyléther) quand l'alkyle est le groupement méthyle, CH₃-(OCH₂)ₙ-OCH₃,
- POMEₙ (polyoxyméthylènediéthyléther) quand l'alkyle est le groupement éthyle,
- POMPₙ (polyoxyméthylènedipropyléther) quand l'alkyle est le groupement propyle,
- POMBₙ (polyoxyméthylènedibutyléther) quand l'alkyle est le groupement butyle.

On appellera POMMn le composé avec n unités oxyméthylène (formol). Ainsi le méthylal (n=1), sera appelé POMM₁, et le butylal sera appelé POMB₁. Si on utilise un mélange de produits issus d'une même synthèse, on l'appellera par exemple POMM₃₋₈, pour un mélange contenant des POMM de n = 3 à 8.

Ces POM sont dissymétriques dans le cas où R est différent de R'. On pourra par exemple avoir un POMME₂ qui désignera un polyoxyméthylèneméthyléthyléther avec deux motifs (CH₂O), soit CH₃-(OCH₂)₂-OC₂H₅.

Les avantages que présentent les POM sont vraisemblablement liés à leur nature chimique qui dépend elle-même de leur mode de synthèse, par lequel il est possible de contrôler la longueur de chaîne. D'une manière générale, le point d'ébullition des POM augmente avec le nombre d'unités formol (CH₂O) et avec la longueur de la chaîne alkyle. Par contre, la solubilité dans l'eau diminue avec la longueur de chaîne (-CH₂O-)ₙ et avec la longueur des chaînes alkyle.

Du point de vue de la toxicité, le méthylal (POMM₁), l'éthylal (POME₁) et le butylal (POMB₁) sont beaucoup moins toxiques que le méthanol et le formol.

Un autre avantage des POM est leur faible coût. En effet, la synthèse des POM fait appel au méthanol et au formol, lui même produit à partir de méthanol.

La synthèse des POM est bien connue depuis de nombreuses années.

Notamment, le livre de J.F. Walker, "FORMALDEHYDE", Robert E. Krieger Publishing Company, Huntington, New York, 3e Edition de 1975 est un ouvrage de référence en la matière. On peut en effet y trouver la description des modes de synthèse aux pages 167 et suivantes, d'une part, et 264 et suivantes, d'autre part. Ces procédés de synthèse sont fondés sur une catalyse acide de la réaction d'un alcool (méthanol ou éthanol) ou d'un acétal (méthylal ou éthylal), sur du formol ou un composé équivalent. Ce type de synthèse est également illustré dans de nombreux documents de brevets tels que US 2,449,469 ou JP 47-40772.

D'autres méthodes de synthèse fondées sur une catalyse de type acides de Lewis ont été également décrites. On peut citer le document de brevet GB 1120524 qui décrit la synthèse de polyoxyméthylènes diéthers stables avec des catalyseurs ioniques de type acides de Lewis.

Les POM mixtes, c'est-à-dire ceux répondant à la formule générale R-(OCH₂)ₙ-OR' avec R différent de R' sont obtenus soit par synthèse directe selon les procédés visés ci-dessus, soit par transacétalisation de deux POM symétriques (R = R') différents.

Selon un mode de réalisation avantageux, l'invention vise l'utilisation d'au moins un composé choisi parmi CH₃- (OCH₂) -OCH₃, CH₃-(OCH₂)₂-OCH₃, CH₃-(OCH₂)₃-OCH₃, CH₃-(OCH₂) ₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)-OC₂H₅, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, C₄H₉-(OCH₂)-OC₄H₉, CH₃-(OCH₂)-OC₂H₅, le 1,1,2,2-tétraéthoxyéthane, le 1,1,3,3-tétraéthoxypropane, le 1,1,3,3-tétraméthoxypropane, le 1,4,9,12-tétraoxadispiro[4,2,4,2]tétradecane, et leurs mélanges et très préférentiellement parmi CH₃-(OCH₂)-OCH₃, CH₃-(OCH₂)₂-OCH₃, C₂H₅- (OCH₂) -OC₂H₅, C₄H₉-(OCH₂)-OC₄H₉, le 1,1,2,2-tétraéthoxyéthane, le 1,1,3,3-tétraéthoxypropane, le 1,1,3,3-tétraméthoxypropane, le 1,4,9,12-tétraoxadispiro[4,2,4,2]tétradécane, et leurs mélanges.

Selon un mode de réalisation avantageux, l'invention concerne l'utilisation d'au moins un composé de formule R-(OCH₂)ₙ-OR' dont la structure est symétrique (R = R').

Selon un mode de réalisation préféré, l'invention vise l'utilisation d'un mélange de composés de formule R-(OCH₂)ₙ-OR dans laquelle soit R représente un méthyle et n va de 2 à 8, soit R représente un éthyle et n va de 1 à 8.

Selon un mode de réalisation encore plus préféré, l'invention vise l'utilisation d'au moins un composé POMM₂₋₈ qui est un mélange de composés de formule CH₃-(OCH₂)ₙ-OCH₃ avec n compris entre 2 et 8, dont la composition est par exemple la suivante :

| n | 2 | 3 | 4 | 5 | 6 | 7 | 8 |
|---|---|---|---|---|---|---|---|
| % | 25-50 | 20-40 | 10-25 | 5-10 | 2-5 | <2 | <1 |

Plus particulièrement, une composition préférée d'un composé POMM₂₋₈ est la suivante :

| N | 2 | 3 | 4 | 5 | 6 | 7 | 8 |
|---|---|---|---|---|---|---|---|
| % | 44 | 32 | 14 | 6 | 2,5 | 1 | <1 |

Selon un mode de réalisation encore plus préféré, l'invention vise l'utilisation d'au moins un composé POME₁₋₈ qui est un mélange de composés de formule C₂H₅-(OCH₂)ₙ-OC₂H₅ avec n compris entre 1 et 8, dont la composition est par exemple la suivante :

| n | 1 | 2 | 3 | 4 | 5 | 6 | 7 | 8 |
|---|---|---|---|---|---|---|---|---|
| % | 58 | 26 | 10 | 4 | 1,5 | <1 | <1 | <1 |

Comme composés de formule (II), on peut citer, par exemple, les diacétals de glyoxal (ethanedial), de propanedial, et de glutaraldéhyde (pentanedial), notamment ceux, nommés ci-après en terminologie anglo-saxonne, de formule: 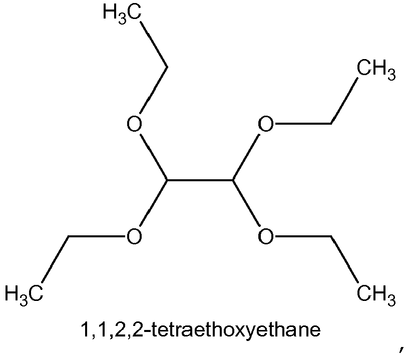 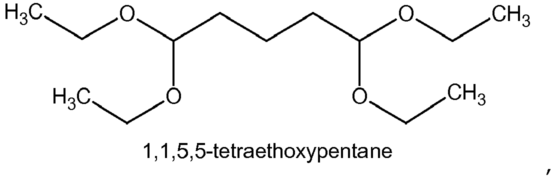 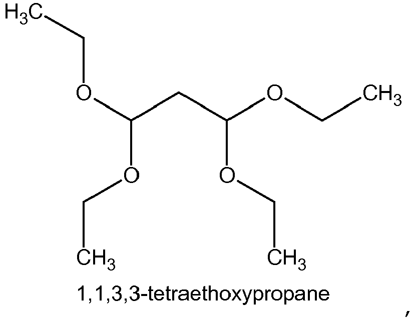 ou 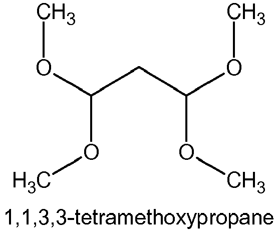 les diacétals de malonaldéhyde, les diacétals de succinaldéhyde,
et également les diacétals cycliques de dialdéhyde, 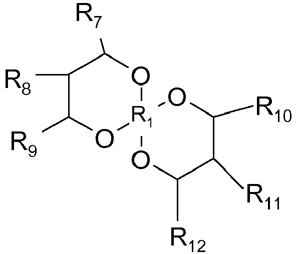 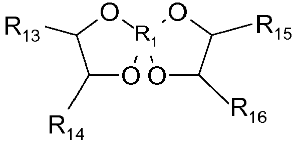 où R₇-R₁₆ représentent indépendamment H, OH, CH₂OH ou un radical alkyle, linéaire ou ramifié, comportant de 1 à 8 atomes de carbone ; et R₁ représente un groupe CH-R₆-CH où R₆ est défini tel que précédemment, tels que par exemple :

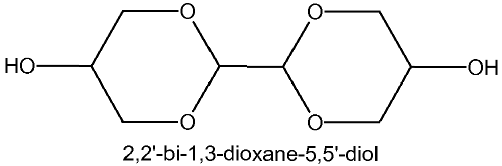

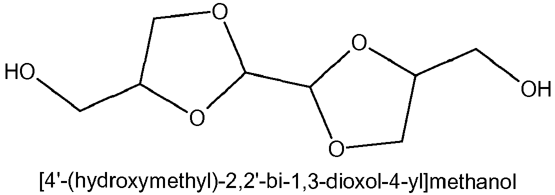

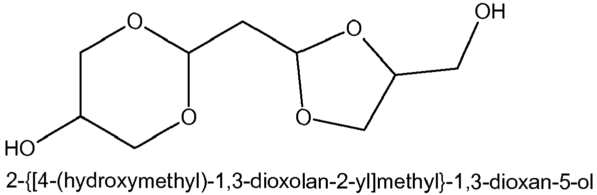

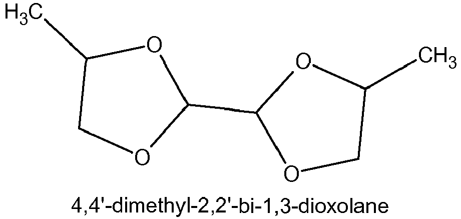

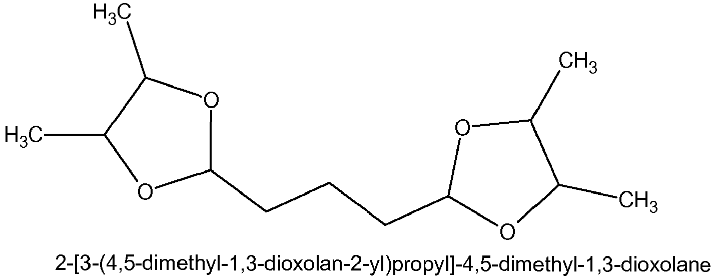

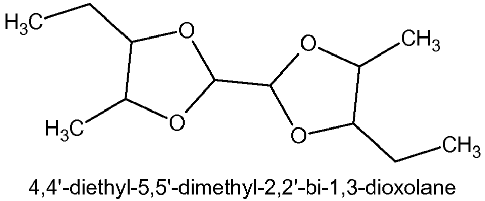

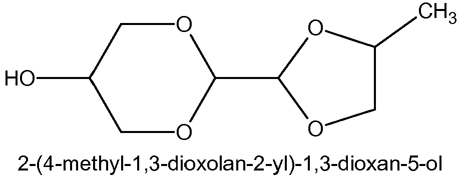

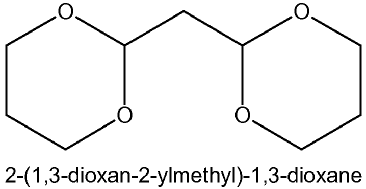

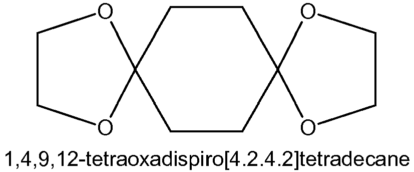

Les méthodes de synthèse des composés (II) sont bien connues. Par exemple, la demande de brevet français FR2844802 indique que des diacétals peuvent être obtenus par réaction de dialdéhydes tels que le glyoxal, le malonaldéhyde, ou le glutaraldéhyde avec des alcools tels que par exemple des monoalcools comme le méthanol, l'éthanol, des diols comme l'éthylèneglycol, le diéthylèneglycol, le 1,4-butanediol, le néopentylglycol, ou des polyols comme le glycérol, le penta-érythritol.

Le ou les composé(s) de formule (I) et/ou de formule (II) peuvent représenter de 5 à 90% en poids, par exemple de 10 à 50% en poids, par rapport au poids total de la composition selon l'invention.

Outre ces composés, la composition utilisée dans l'invention renferme au moins un agent biocide.

Par cette expression, on entend notamment les composés identifiés comme tels dans le Règlement CE n° 1048/2005 du 13 juin 2005 en tant que "substances actives de fluides utilisés pour l'embaumement et la taxidermie", à savoir : le formaldéhyde, le dioxyde de soufre, l'hydrogénosulfite de sodium, le disulfite de sodium, le sulfite de sodium, le sulfite de potassium, le disulfite de potassium, le bronopol, la 1,2-benzisothiazole-3(2H)-one, le monochlorhydrate de dodécylguanidine, le glutaral, le dithioxyanate de méthylène, le monochlorhydrate de polymère de N,N"'-1,6-hexane-diylbis[N'-cyanoguanidine] et d'hexaméthylène diamine/polyhexaméthylène biguanide, le peroxyde de butanone-2, le 3-(2,2-dichlorovinyl)-2,2-diméthylcyclopropanecarboxylate de m-phénoxybenzyle/perméthrine, les chlorures d'ammonium quaternaire, la bis(trichlorométhyl)sulfone, l'acide borique, la N,N-diéthyl-m-toluamide, la 2-méthyl-2H-isothiazole-3-one. On peut également utiliser comme biocides les composés de formule (C₃H₄O)n. (C₃H₄O₂)m où n>m, tels que le Chemyde^{®} de la société CHEMEQ, ainsi que l'iodure de polyvinylpyrrolidone, disponible notamment auprès de la société GRAYMOR CHEMICAL HAMBURG et décrit dans la demande de brevet EP1365646 et leurs mélanges.

Ces agents biocides sont généralement présents en faible quantité dans la composition utilisée dans l'invention.

Ils représentent ainsi par exemple de 2 à 90 % en poids, de préférence de 4 à 50 % en poids, par rapport au poids total de la composition. Avant usage, la composition peut être diluée par le thanatopracteur de sorte que la concentration en agent biocide soit par exemple comprise entre 0,2 et 80 % en poids.

La composition utilisée dans l'invention peut également renfermer au moins un agent pro-pénétrant.

Par cette expression, on entend les agents (autres que l'eau) favorisant la pénétration de la composition dans le corps, au travers des conduits sudoripares, via les follicules pileux ou les glandes sébacées, ou bien au travers du stratum corneum et jusque dans le derme. Ce dernier type d'agents pro-pénétrants est préféré pour une utilisation dans la présente invention. Ces agents peuvent augmenter la perméabilité du stratum corneum, par exemple en dissolvant ou désorganisant la structure lipidique bicouche intercellulaire ou en agissant avec les protéines intracellulaires ou en améliorant le coefficient de partition des composés de formule (I) et/ou de formule (II) dans le stratum corneum. En variante, les agents pro-pénétrants peuvent agir comme vecteurs améliorant le transport des composés de formule (I) et/ou de formule (II) au travers du stratum corneum.

Des agents pro-pénétrants utilisables dans la présente invention sont notamment : les mono-alcools linéaires ou ramifiés en C₂-C₆ tels que l'éthanol ou le n-butanol ; les polyols tels que le propylène glycol, le glycérol, le dipropylène glycol et le polyéthylèneglycol ; les acides gras, de préférence mono- ou polyinsaturés, en C₈-C₂₂ tels que les acides oléique, linoléique, laurique, caprylique ou caprique ; les cyclodextrines ; l'isosorbide et les dérivés de l'iosorbide comme le diméthylisosorbide (voir la demande US 2008/0003273)et le dinitrate d'isosorbide, les tensioactifs dont les esters d'acides gras de sucrose, tels que l'oléate de sucrose, les esters d'acides gras et de sorbitane, les éthers d'alcools gras et de polyéthylèneglycol (PEG), tels que les oléyléthers de PEG, les huiles de ricin hydrogénées polyéthoxylées et les phospholipides, tels que la lécithine ; les esters tels que les acétates d'alkyle en C1-C4, les mono- et polyesters d'acide gras et de glycérol ou de propylène glycol, tels que le mono-laurate ou le tri-oléate de glycérol, les esters d'alcools gras d'acide lactique ou d'acide glycolique et les esters d'acides gras et d'isopropyle ; les alcools gras en C8-C18, tels que le n-nonanol, l'alcool oléylique et l'alcool laurylique ; les azones tels que la N-alkylazacycloheptan-2-one ; les N,N-dialkylamino-alcanoates d'alkyle tels que le 2-(N,N diméthylamino)-propionate de dodécyle (DDAIP); les amides telles que la N,N-diéthyl-m-toluamide ; l'urée et les dérivés d'urée tels que l'allantoïne ; les terpènes et terpénoïdes tels que les huiles essentielles, par exemple le menthol, le thymol et le camphre ; le nicotinate de méthyle ou de benzyle ; les sulfoxydes tels que le DMSO (diméthylsulfoxyde) ou le décylméthylsulfoxyde ; et leurs mélanges.

D'autres exemples d'agents pro-pénétrants sont cités par OSBORNE et al. dans l'article "Skin Penetration Enhancers Cited in the Technical Literature", publié dans Pharmaceutical Technology (Novembre 1997). Des mélanges de mono-alcools ou de cyclodextrines avec d'autres agents pro-pénétrants sont particulièrement utiles. On préfère par ailleurs que les agents pro-pénétrants selon l'invention ne comprennent pas de pyrrolidones (telles que la N-méthyl-2-pyrrolidone).

Dans certains cas, pour améliorer la pénétration de la composition dans la peau, l'agent pro-pénétrant peut être utilisé pour encapsuler les composés de formule (I) et/ou de formule (II) dans des vésicules, telles que des liposomes, des niosomes ou des nanocapsules, ou pour former des complexes à partir de ces composés. Il est ainsi possible, notamment, de former des complexes d'inclusion de ces composés actifs avec une cyclodextrine.

Les agents pro-pénétrants peuvent par exemple représenter de 1 à 80 % en poids, de préférence de 5 à 70 % en poids, par rapport au poids total de la composition. Selon une forme d'exécution de l'invention, ils peuvent être présents dans un ratio avec les composés de formule (I) et/ou de formule (II) permettant l'obtention d'un mélange eutectique.

La composition utilisée dans l'invention peut en outre contenir au moins un agent colorant tel que le jaune orangé S, le dioxyde de titane et/ou l'oxyde de zinc ; au moins un agent aromatisant tel que la menthe, la coriandre, le thym, la citronnelle et/ou le pamplemousse ; au moins un agent humectant ; et leurs mélanges.

Cette composition peut se présenter sous toute forme galénique convenant à une application topique sur la peau, en particulier sous forme de solution, d'émulsion ou de gel. Elle peut avoir une consistance liquide, semi- liquide ou solide et se présenter ainsi sous forme de lotion, de fluide, de crème, de pâte, voire de mousse. Cette composition peut éventuellement être conditionnée dans un flacon-pompe ou un dispositif aérosol.

L'invention a également pour objet l'utilisation topique de la composition précitée pour la conservation du corps humain ou animal.

Dans un mode de réalisation avantageux, le corps peut être immergé dans la composition. Dans un autre mode de réalisation avantageux, la composition peut être appliquée par voie topique sur le corps, notamment par badigeonnage.

Il est également possible selon l'invention d'améliorer la pénétration transdermique de la composition par utilisation d'une ou plusieurs techniques telles que l'ionophorèse, l'électroporation, la sonophorèse ou la phonophorèse, comme décrit notamment par CROSS et al. dans Curr. Drug Delivery, 2004, 1, 81-92, par BARRY et al. dans Eur. J. Pharm. Sci., 2001, 14, 101-14 ou par TAO et al. dans Adv. Drug Delivery Rev., 2003, 55, 315-28.

L'invention sera maintenant illustrée par l'exemple non limitatif suivant, qui n'a pas pour but de limiter la portée de l'invention, définie par les revendications annexées.

### Exemple

On badigeonne la dépouille mortelle d'un canard d'une solution comprenant 600ml de POMM₂₋₈ ayant la composition suivante :

| n | 2 | 3 | 4 | 5 | 6 | 7 | 8 |
|---|---|---|---|---|---|---|---|
| % | 44 | 32 | 14 | 6 | 2,5 | 1 | <1 |

200ml de butanol, 150 ml de glutaraldéhyde, 100ml de solution saline, 80ml de savon et 20ml de colorant et d'essences végétales.

## Revendications

1. Utilisation topique pour la conservation du corps humain ou animal d'une composition renfermant :
(a) au moins un polyoxyméthylènedialkyléther (POM) de formule (I) :
R-(OCH₂)ₙ-OR' (I)
dans laquelle R et R', identiques ou différents, représentent un radical alkyle, linéaire ou ramifié, comportant de 1 à 5 atomes de carbone et n est un indice de valeur comprise entre 1 et 8,
et/ou au moins un acétal de dialdéhyde de formule (II) : 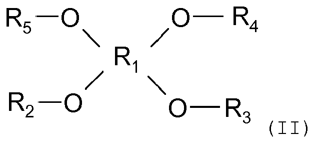 où R₂, R₃, R₄ et R₅ désignent indépendamment un radical alkyle, linéaire ou ramifié, comportant de 1 à 8 atomes de carbone, ou R₂ et R₅ et/ou R₃ et R₄ forment ensemble et avec les deux atomes d'oxygène auxquels ils sont rattachés un hétérocycle saturé ou insaturé à 5 ou 6 chaînons éventuellement substitué par un ou plusieurs groupes choisis parmi OH, CH₂OH ou un radical alkyle, linéaire ou ramifié, comportant de 1 à 8 atomes de carbone ; et R₁ représente un groupe CH-R₆-CH où R₆ forme une liaison ou représente un radical alkylène linéaire ou ramifié, comportant de 1 à 5 atomes de carbone ou un carbocycle saturé ou insaturé comportant de 3 à 8 atomes de carbone; ou R₁ est un carbocycle saturé ou insaturé comportant de 3 à 8 atomes de carbone,
(b) au moins un agent biocide choisi parmi : le formaldéhyde, le dioxyde de soufre, l'hydrogénosulfite de sodium, le disulfite de sodium, le sulfite de sodium, le sulfite de potassium, le disulfite de potassium, le bronopol, la 1,2-benzisothiazole-3(2H)-one, le monochlorhydrate de dodécylguanidine, le glutaral, le dithioxyanate de méthylène, le monochlorhydrate de polymère de N,N"'-1,6-hexane-diylbis[N'-cyanoguanidine] et d'hexaméthylène diamine/polyhexaméthylène biguanide, le peroxyde de butanone-2, le 3-(2,2-dichlorovinyl)-2,2-diméthylcyclopropanecarboxylate de m-phénoxybenzyle/perméthrine, les chlorures d'ammonium quaternaire, la bis(trichlorométhyl)sulfone, l'acide borique, la N,N-diéthyl-m-toluamide, la 2-méthyl-2H-isothiazole-3-one, les composés de formule (C₃H₄O) n. (C₃H₄O₂)m où n>m, l'iodure de polyvinylpyrrolidone et leurs mélanges, et
(c) éventuellement, au moins un agent pro-pénétrant.

2. Utilisation selon la revendication 1, **caractérisée en ce que** le composé de formule (I) est choisi parmi : CH₃-(OCH₂-OCH₃, CH₃-(OCH₂)₂-OCH₃, CH₃-(OCH₂)₃-OCH₃, CH₃-(OCH₂)₄-OCH₃, CH₃- (OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)-OC₂H₅, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, C₄H₉-(OCH₂)-OC₄H₉, CH₃-(OCH₂)-OC₂H₅, le 1,1,2,2-tétraéthoxyéthane, le 1,1,3,3-tétraéthoxypropane, le 1,1,3,3-tétraméthoxypropane, le 1,4,9,12-tétraoxadispiro[4,2,4,2]tétradecane, et leurs mélanges et très préférentiellement parmi CH₃-(OCH₂)-OCH₃, CH₃-(OCH₂)₂-OCH₃, C₂H₅-(OCH₂)-OC₂H₅, C₄H₉-(OCH₂)-OC₄H₉, le 1,1,2,2-tétraéthoxyéthane, le 1,1,3,3-tétraéthoxypropane, le 1,1,3,3-tétraméthoxypropane, le 1,4,9,12-tétraoxadispiro[4,2,4,2]tétradécane, et leurs mélanges.

3. Utilisation selon la revendication 1, **caractérisée en ce que** le composé de formule (I) est un composé POMM₂₋₈ qui est un mélange de composés de formule CH₃-(OCH₂)ₙ-OCH₃ avec n compris entre 2 et 8.

4. Utilisation selon la revendication 1, **caractérisée en ce que** le composé de formule (I) est un composé POME₁₋₈ qui est un mélange de composés de formule C₂H₅-(OCH₂)ₙ-OC₂H₅ avec n compris entre 1 et 8.

5. Utilisation selon la revendication 1, **caractérisée en ce que** le composé de formule (II) est choisi parmi : les diacétals de glyoxal (ethanedial), de propanedial et de glutaraldéhyde (pentanedial).

6. Utilisation selon l'une quelconque des revendications 1 à 5, **caractérisée en ce que** l'agent pro-pénétrant est choisi parmi : les mono-alcools linéaires ou ramifiés en C₂-C₆ ; les polyols ; les acides gras, de préférence mono- ou polyinsaturés, en C₈-C₂₂ ; les cyclodextrines ; les tensioactifs ; les acétates d'alkyle en C₁-C₄, les mono- et polyesters d'acide gras et de glycérol ou de propylène glycol, les esters d'alcools gras d'acide lactique ou d'acide glycolique et les esters d'acides gras et d'isopropyle ; les alcools gras en C₈-C₁₈ ; les azones ; les N,N-dialkylamino-alcanoates d'alkyle ; les amides ; l'urée et les dérivés d'urée ; les terpènes et terpénoïdes ; le nicotinate de méthyle ou de benzyle ; les sulfoxydes ; l'isosorbide et ses dérivés ; et leurs mélanges.

7. Utilisation selon l'une quelconque des revendications 1 à 6, **caractérisée en ce que** le corps est immergé dans la composition.

8. Utilisation selon l'une quelconque des revendications 1 à 6, **caractérisée en ce que** la composition est appliquée par voie topique sur le corps, notamment par badigeonnage.

## Patentansprüche

1. Topische Verwendung einer Zusammensetzung, enthaltend:
(a) mindestens einen Polyoxymethylendialkylether (POM) der Formel (I):
R-(OCH₂)ₙ-OR' (I)
worin R und R' gleich oder verschieden sind und für einen linearen oder verzweigten Alkylrest mit 1 bis 5 Kohlenstoffatomen stehen und n für einen Index mit einem Wert zwischen 1 und 8 steht, und/oder mindestens ein Dialdehydacetal der Formel (II) : 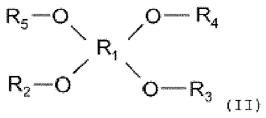 wobei R₂, R₃, R₄ und R₅ unabhängig für einen linearen oder verzweigten Alkylrest mit 1 bis 8 Kohlenstoffatomen stehen oder R₂ und R₅ und/oder R₃ und R₄ zusammen und mit den beiden Sauerstoffatomen, an die sie gebunden sind, einen gesättigten oder ungesättigten 5- oder 6-gliedrigen Heterocyclus bilden, der gegebenenfalls durch eine oder mehrere aus OH, CH₂OH oder einem linearen oder verzweigten Alkylrest mit 1 bis 8 Kohlenstoffatomen ausgewählte Gruppen substituiert ist; und R₁ für eine CH-R₆-CH-Gruppe steht, wobei R₆ eine Bindung bildet oder für einen linearen oder verzweigten Alkylenrest mit 1 bis 5 Kohlenstoffatomen oder einen gesättigten oder ungesättigten Carbocyclus mit 3 bis 8 Kohlenstoffatomen steht; oder R₁ für einen gesättigten oder ungesättigten Carbocyclus mit 3 bis 8 Kohlenstoffatomen steht,
(b) mindestens ein biozides Mittel, ausgewählt aus: Formaldehyd, Schwefeldioxid, Natriumhydrogensulfit, Natriumdisulfit, Natriumsulfit, Kaliumsulfit, Kaliumdisulfit, Bronopol, 1,2-Benziso-thiazol-3(2H)-on, Dodecylguanidin-monohydrochlorid, Glutaral, Methylendithiocyanat, dem Polymer von N,N"'-1,6-Hexandiylbis[N'-cyano-guanidin] und Hexamethylendiamin/Polyhexamethylenbiguanid-monohydrochlorid, 2-Butanonperoxid, 3-(2,2-Dichlorvinyl)-2,2-dimethylcyclopropancarbonsäure-m-phenoxybenzylester/Permethrin, quartären Ammoniumchloriden, Bis(trichlormethyl)sulfon, Borsäure, N,N-Diethyl-m-toluamid, 2-Methyl-2H-isothiazol-3-on, den Verbindungen der Formel (C₃H₄O)n. (C₃H₄O₂)m, wobei n > m, Polyvinylpyrrolidoniodid und Mischungen davon, und
(c) gegebenenfalls mindestens ein penetrationsförderndes Mittel,
zur Konservierung des menschlichen oder tierischen Körpers.

2. Verwendung nach Anspruch 1, **dadurch gekennzeichnet, dass** die Verbindung der Formel (I) aus CH₃- (OCH₂) -OCH₃, CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)-OC₂H₅, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂) ₇-OC₂H₅, C₂H₅- (OCH₂)₈-OC₂H₅, C₄H₉-(OCH₂)-OC₄H₉, CH₃-(OCH₂)-OC₂H₅, 1,1,2,2-Tetraethoxyethan, 1,1,3,3-Tetraethoxypropan, 1,1,3,3-Tetramethoxypropan, 1,4,9,12-Tetraoxadispiro[4.2.4.2]tetradecan und Mischungen davon und ganz besonders bevorzugt aus CH₃- (OCH₂) -OCH₃, CH₃-(OCH₂)₂-OCH₃, C₂H₅-(OCH₂)-OC₂H₅, C₄H₉- (OCH₂) -OC₄H₉, 1,1,2,2-Tetraethoxyethan, 1,1,3,3-Tetraethoxypropan, 1,1,3,3-Tetramethoxy-propan, 1,4,9,12-Tetraoxadispiro[4.2.4.2]tetra-decan und Mischungen davon ausgewählt ist.

3. Verwendung nach Anspruch 1, **dadurch gekennzeichnet, dass** es sich bei der Verbindung der Formel (I) um eine Verbindung POMM₂₋₈ handelt, bei der es sich um ein Gemisch von Verbindungen der Formel CH₃-(OCH₂)ₙ-OCH₃ mit n zwischen 2 und 8 handelt.

4. Verwendung nach Anspruch 1, **dadurch gekennzeichnet, dass** es sich bei der Verbindung der Formel (I) um eine Verbindung POME₁₋₈ handelt, bei der es sich um ein Gemisch von Verbindungen der Formel C₂H₅-(OCH₂)ₙ-OC₂H₅ mit n zwischen 1 und 8 handelt.

5. Verwendung nach Anspruch 1, **dadurch gekennzeichnet, dass** die Verbindung der Formel (II) aus den Diacetalen von Glyoxal (Ethandial), Propandial und Glutaraldehyd (Pentandial) ausgewählt ist.

6. Verwendung nach einem der Ansprüche 1 bis 5, **dadurch gekennzeichnet, dass** das penetrationsfördernde Mittel aus linearen oder verzweigten C₂-C₆-Monoalkoholen; Polyolen; C₈-C₂₂-Fettsäuren, die vorzugsweise ein- oder mehrfach ungesättigt sind; Cyclodextrinen; Tensiden; Essigsäure-C₁-C₄-alkyl-estern, Mono- und Polyestern von Fettsäuren und Glycerin oder Propylenglykol, Fettalkoholester von Milchsäure oder Glykolsäure und Fettsäureisopropylestern; C₈-C₁₈-Fettalkoholen; Azonen; N,N-Dialkylaminoalkansäurealkylestern; Amiden; Harnstoff und Harnstoffderivaten; Terpenen und Terpinoiden; Nicotinsäuremethylester oder -benzylester; Sulfoxiden; Isosorbid und Derivaten davon und Mischungen davon ausgewählt ist.

7. Verwendung nach einem der Ansprüche 1 bis 6, **dadurch gekennzeichnet, dass** der Körper in die Zusammensetzung eingetaucht wird.

8. Verwendung nach einem der Ansprüche 1 bis 6, **dadurch gekennzeichnet, dass** die Zusammensetzung auf topischem Wege, insbesondere durch Aufpinseln, auf den Körper aufgebracht wird.

## Claims

1. Topical use in the preservation of a human or animal body of a composition including:
(a) at least one polyoxymethylene dialkyl ether (POM) of formula (I):
R-(OCH₂)ₙ-OR' (I)
wherein R and R', identical or different, represent a linear or branched alkyl radical comprising 1 to 5 carbon atoms and n is an index with a value comprised between 1 and 8,
and/or at least one dialdehyde acetal of formula (II) : 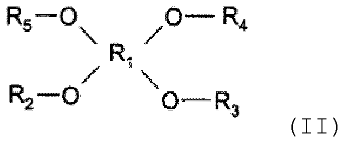 where R₂, R₃, R₄ and R₅ designate independently a linear or branched alkyl radical comprising 1 to 8 carbon atoms, or R₂ and R₅ and/or R₃ and R₄ form together and with the two oxygen atoms to which they are attached a saturated or unsaturated heterocycle with 5 or 6 members optionally substituted by one or more groups chosen from OH, CH₂OH or a linear or branched alkyl radical comprising 1 to 8 carbon atoms; and R₁ represents a CH-R₆-CH group where R₆ forms a bond or represents a linear or branched alkylene radical, comprising 1 to 5 carbon atoms or a saturated or unsaturated carbocycle comprising 3 to 8 carbon atoms; or R₁ is a saturated or unsaturated carbocycle comprising 3 to 8 carbon atoms,
(b) at least one biocidal agent chosen from: formaldehyde, sulfur dioxide, sodium hydrogensulfite, sodium disulfite, sodium sulfite, potassium sulfite, potassium disulfite, bronopol, 1,2-benzisothiazol-3(2H)-one, dodecylguanidine monohydrochloride, glutaral, methylene dithiocyanate, the polymer of N,N"'-1,6-hexanediylbis[N'-cyanoguanidine] and of hexa-methylenediamine/polyhexamethylene biguanide monohydrochloride, 2-butanone peroxide, m-phenoxybenzyl 3-(2,2-dichlorovinyl)-2,2-dimethylcyclopropanecarboxylate/permethrin, quaternary ammonium chlorides, bis(trichloromethyl) sulfone, boric acid, N,N-diethyl-m-toluamide, 2-methyl-2H-isothiazol-3-one, the compounds of formula (C₃H₄O)ₙ·(C₃H₄O₂)ₘ where n > m, polyvinylpyrrolidone iodide and their mixtures, and
(c) optionally at least one propenetrating agent.

2. Use according to Claim 1, **characterized in that** the compound of formula (I) is chosen from: CH₃-(OCH₂)-OCH₃, CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)-OC₂H₅, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)5-OC₂H₅, C₂H₅-(OCH₂)₆-OC₂H₅, C₂H₅-(OCH₂)₇-OC₂H₅, C₂H₅-(OCH₂)₈-OC₂H₅, C₄H₉-(OCH₂)-OC₄H₉, CH₃-(OCH₂)-OC₂H₅, 1,1,2,2-tetraethoxyethane, 1,1,3,3-tetraethoxypropane, 1,1,3,3-methoxypropane, 1,4,9,12-tetraoxadispiro[4.2.4.2]tetradecane, and mixtures thereof and very preferentially from CH₃-(OCH₂)-OCH₃, CH₃-(OCH₂)₂-OCH₃, C₂H₅-(OCH₂)-OC₂H₅, C₄H₉-(OCH₂)-OC₄H₉, 1,1,2,2-tetraethoxyethane, 1,1,3,3-tetraethoxypropane, 1,1,3,3-tetramethoxypropane, 1,4,9,12-tetraoxadispiro[4.2.4.2]tetradecane, and mixtures thereof.

3. Use according to Claim 1, **characterized in that** the compound of formula (I) is a POMM₂₋₈ compound which is a mixture of compounds of formula CH₃-(OCH₂)ₙ-OCH₃ with n comprised between 2 and 8.

4. Use according to Claim 1, **characterized in that** the compound of formula (I) is a POME₁₋₈ compound which is a mixture of compounds of formula C₂H₅-(OCH₂)ₙ-OC₂H₅ with n comprised between 1 and 8.

5. Use according to Claim 1, **characterized in that** the compound of formula (II) is chosen from: glyoxal (ethanedial), propanedial and glutaraldehyde (pentanedial) diacetals.

6. Use according to any one of Claims 1 to 5, **characterized in that** the propenetrating agent is chosen from: linear or branched C₂-C₆ monoalcohols; polyols; C₈-C₂₂ fatty acids, preferably mono- or polyunsaturated fatty acids; cyclodextrins; surfactants; C₁-C₄ alkyl acetates, glycerol or propylene glycol fatty acid mono- and polyesters, lactic acid or glycolic acid fatty alcohol esters and isopropyl fatty acid esters; C₈-C₁₈ fatty alcohols; azones; alkyl N,N-dialkylaminoalkanoates; amides; urea and urea derivatives; terpenes and terpenoids; methyl or benzyl nicotinate; sulfoxides; isosorbide and its derivatives; and their mixtures.

7. Use according to any one of Claims 1 to 6, **characterized in that** the body is immersed in the composition.

8. Use according to any one of Claims 1 to 6, **characterized in that** the composition is applied to the body by topical route, especially by brushing.
